Europäisches Patentamt

European Patent Office

Office européen des brevets

(11) Publication number: **0 280 464**
**A1**

(12) # EUROPEAN PATENT APPLICATION

(21) Application number: 88301328.6

(22) Date of filing: 17.02.88

(51) Int. Cl.4: **E04D 3/36**

(30) Priority: 18.02.87 GB 8703707

(43) Date of publication of application:
31.08.88 Bulletin 88/35

(84) Designated Contracting States:
BE DE FR GB NL

(71) Applicant: **WILLETT LIMITED**
**Mitcham House 681 Mitcham Road**
**Croydon Surrey CR9 3AP(GB)**

(72) Inventor: **Cheshire, John Francis**
**'Birnham', Harborough Hill**
**West Chiltington, West Sussex RH20**
**2PW(GB)**
Inventor: **Sprague, Adrian Malcolm**
**4 Victoria Way, Herontye**
**East Grinstead, West Sussex RH19 4RY(GB)**

(74) Representative: **Abrams, Michael John et al**
**HASELTINE LAKE & CO. Hazlitt House 28**
**Southampton Buildings Chancery Lane**
**London WC2A 1AT(GB)**

(54) **Improvements relating to the joining and sealing of overlapping structural elements such as roof decking.**

(57) A cap is disclosed which is suitable for sealing the connection between overlapping roof elements (6). The cap comprises a body portion (1) open at its wide end and closed off at its narrow end by a closure element (3) integral with said body portion, and having at its wide end an outwardly extending annular flange (2) formed integrally with said body portion (1), said annular flange (2), said closure element (3) and said body portion (1) all being imperforate.

A connection system and a sealing method using this cap are also disclosed.

FIG.1

# IMPROVEMENTS RELATING TO THE JOINING AND SEALING OF OVERLAPPING STRUCTURAL ELEMENTS SUCH AS ROOF DECKING

This invention relates to the joining and sealing of structural elements such as roof decking and, more particularly but not exclusively, is concerned with a cap for application over the tops of industrial roof-deck fixings, a sealing method making use of the cap and a connection system including said cap.

Industrial roof decking generally consists of a plurality of channelled or corrugated panels which are positioned side by side with a limited degree of overlap in order to provide the necessary extent of roofing. Adjacent panels are bolted together through their overlapping sections. The connection between adjacent roofing elements often gives rise to leakage problems. An object of the present invention is to provide a cap for location over such connections which reduces the risk of such leakage.

According to one aspect of the present invention, there is provided a cap for sealing connections between adjacent roofing elements, characterised in that the cap comprises a body portion open at its wide end and closed off at its narrow end by a closure element integral with said body portion, and having at its wide end an outwardly extending annular flange formed integrally with said body portion, said annular flange, said closure element and said body portion all being imperforate.

According to a second aspect of the present invention, there is provided a method of sealing a connection between overlapping roof sections, which comprises (a) cleaning said connection with a de-greasing solvent; and (b) placing over said connection a cap as defined hereinabove, the cap being filled with sufficient sealing compound to permeate the entire volume of the cap when it is in place.

According to a third aspect of the present invention, there is provided a connection system for use with structural elements such as roof decks, which comprises: (a) a bolt intended to pass through the components which are to be connected together; and (b) a sealing cap which comprises a body portion open at its wide end and closed off at its narrow end by a closure element integral with said body portion, and having at its wide end an outwardly extending annular flange formed integrally with said body portion, said annular flange, said closure element and said body portion all being imperforate, and said cap being filled, in use, with a sealing compound or mastic and positioned over the exposed head of said bolt so as to surround the head of said bolt completely.

Preferably, a cap in accordance with this invention is produced integrally by casting or moulding. Advantageously, the cap is formed of a resilient plastics material, for example from a polyester such as ethyl vinyl acetate. The body portion is advantageously frustoconical, and the closure element is advantageously planar or domed in shape.

A cap in accordance with this invention may be manufactured in various sizes according to its intended use. Typically, the overall diameter of the cap will be in the range 12.7 mm to 72 mm, although larger sizes may be produced if desired. Colouring materials may be included in the plastics material if desired.

In use, a cap in accordance with this invention is filled completely with a suitable sealant compound or mastic and is then placed over a connection which is to be sealed. Typically, the connection which is to be capped will be in the form of a projecting bolt head located on the upper of two overlapping roofing elements. Prior to emplacement of the mastic-filled cap, the area around the connection which is to be treated should be pre-cleaned with a de-greasing solvent. We have found that "Expandite Joint Cleaner Solvent" manufactured by Expandite Limited is suitable for this purpose. After application of the de-greasing solvent, time should be allowed to permit complete evaporation of solvent prior to the application of the mastic-filled cap. Sufficient mastic should be placed into the cap prior to its emplacement to ensure that the volume within the body of the cap is completely filled with mastic after the cap is positioned over, for example, a projecting bolt head. The actual volume of mastic used can be calculated in accordance with the dimensions of the cap and those of the connection over which it is to be placed. When suitably determined, the mastic volume will allow for a small flow around the edges of the flange of the cap when the cap is placed in position.

It is important that the cap should completely surround the connection which is to be capped. To this end, the annular flange is not just a lip surrounding the base of the body portion, but is dimensioned so as to provide a suitable contact area with the surface of the element through which the connection passes. Preferably, the annular flange and the body portion are both circular in plan view, with the width of the flange (measured radially) being at least one tenth of the diameter of the body portion where it adjoins the annular flange. If this diameter of the body portion is termed "D", then the width of the flange is preferably greater than 0.125D and is desirably in the range 0.15D-0.65D, and most preferably in the range 0.2D-0.4D.

The annular flange of the cap may be planar so that the cap will fit against a flat surface (when used with grooved or channelled roofing decks having flat sections) or it may be curved to accommodate for the curvature of corrugated roof sections.

We have found the cap of this invention particularly effective, in that it provides a double seal against water penetration (cap and mastic) and also considerably reduces condensation on the interior of the structure over which it is placed (e.g. roofing) by reducing heat loss through the connection, which is generally made of metal and is therefore highly conductive of heat. Also, once the mastic has hardened, the connection remains weatherproof even if the cap itself should become displaced.

For a better understanding of the invention, and to show how the same may be carried into effect, reference will now be made, by way of example, to the accompanying drawings, in which:

FIGURE 1 is a section through a cap in accordance with the invention;

FIGURE 2 is a plan view of the cap shown in Figure 1;

FIGURE 3 illustrates some typical roof decking profiles with which a cap of this invention may be used; and

FIGURE 4 illustrates schematically different cap configurations suitable for use with the roof decking profiles of Figure 3.

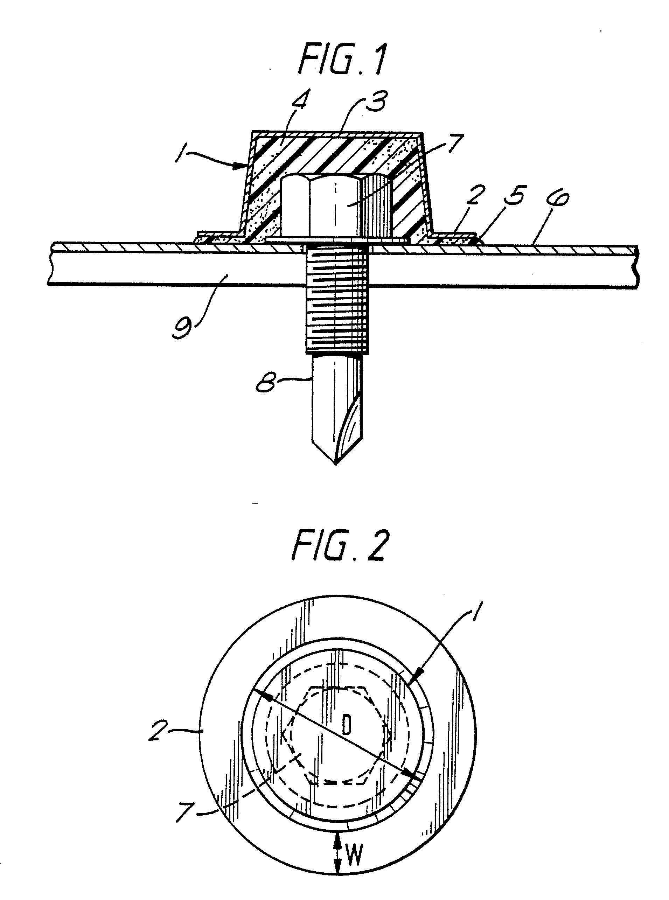

Referring now to Figures 1 and 2 of the drawings, the cap comprises a frustoconical body section 1 which has a diameter D (see figure 2) of 45 mm and which carries, at its lower (wide) end a planar, outwardly extending annular flange 2. The width W of the flange (measured across its upper surface - see figure 2) is 10 mm. The overall diameter of the cap is, in this embodiment, 65mm (D + 2W). Hence the ratio between the width W of the flange 2 and the diameter D of body portion 1 is:-

$$W{:}D = 1{:}4.5 \text{ or } W = 0.22D.$$

The upper (narrow) end of body portion 1 is closed by a flat plate section 3 which is 40 mm in diameter. The interior of the cap is filled with a mastic sealant 4 prior to emplacement of the cap, sufficient mastic is packed into its interior to ensure that a thin layer 5 is pressed out beneath flange 2 when the cap is located over a connection - in this case, over the head 7 of a self-tapping bolt 8 which secures roof cladding 6 to rafter 9. In alternative embodiments, the flat section 3 is replaced by a domed closure section. Also, the annular flange 2 need not be planar; its shape will be determined by the contours of the surface onto which, in use, it is to be placed. The illustrated cap is manufactured by moulding from ethyl vinyl acetate, although other resilient polymers may be used if desired.

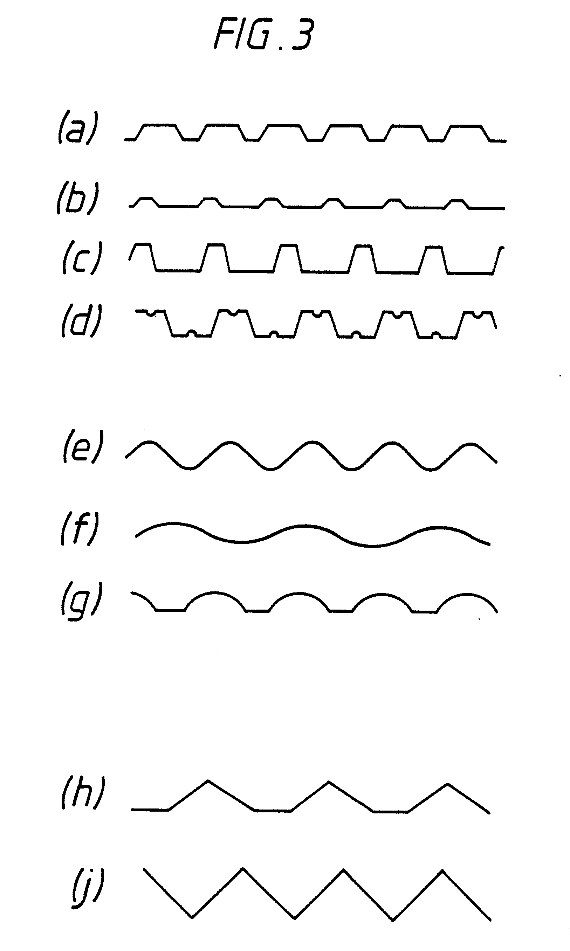

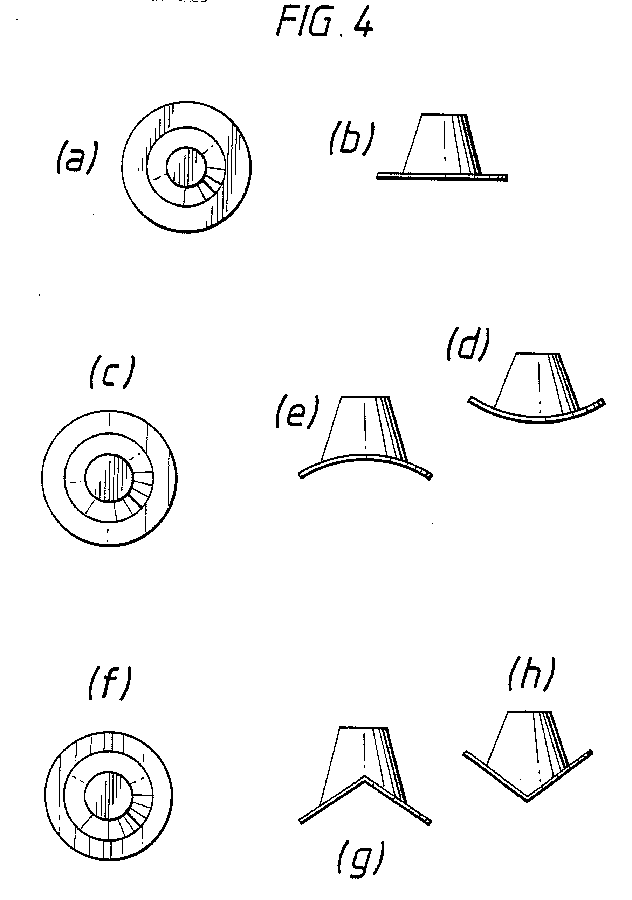

In Figure 3, nine typical roof decking profiles are illustrated. The cap illustrated in Figures 1 and 2 (shown schematically in Figure 4(a) and (b)) may be used with profiles 3(a), (b), (c) and (d); for use with a curved roof section such as illustrated at 3-(e) and (f), the annular flange 2 is shaped to conform to the curvature of the roofing element, as seen in Figures 4(d) and (e). Similarly, with the deck structures of Figures 3(h) and 3(j), a "V"-shaped flange is adopted, as illustrated in Figures 4(g) and 4(h). The diameter and/or radius of curvature of the annular flange will be determined by the profile of the roof decking.

## Claims

1. A cap for sealing connections between adjacent roofing elements, characterised in that the cap comprises a body portion (1) open at its wide end and closed off at its narrow end by a closure element (3) integral with said body portion (1), and having at its wide end an outwardly extending annular flange (2) formed integrally with said body portion (1), said annular flange, said closure element and said body portion all being imperforate.

2. A cap as claimed in claim 1, wherein said body portion (1) is frustoconical in form.

3. A cap as claimed in claim 1 or 2, wherein the width, W, of said annular flange (2) is at least 12.5% of the diameter, D, of said body portion (1).

4. A cap as claimed in claim 3, wherein the width, W, of said annular flange (2) is in the range 0.15D to 0.65D.

5. A cap as claimed in claim 4, wherein the width, W, of said annular flange (2) is in the range 0.2D to 0.4D.

6. A cap as claimed in claim 1, 2, 3, 4 or 5, wherein said annular flange (2) is planar.

7. A cap as claimed in claim 1, 2, 3, 4 or 5, wherein said annular flange (2) is shaped to fit over a curved or corrugated or V-shaped surface.

8. A method of sealing a connection between overlapping roof sections, which comprises (a) cleaning said connection with a de-greasing solvent; and (b) placing over said connection a cap as claimed in any preceding claim, the cap being filled with sufficient sealing compound to permeate the entire volume of the cap when it is in place.

9. A connection system for use with structural elements such as roof decks, which comprises: (a) a bolt (7, 8) intended to pass through the components (6, 9) which are to be connected together;

and (b) a sealing cap which comprises a body portion (1) open at its wide end and closed off at its narrow end by a closure element (3) integral with said body portion, and having at its wide end an outwardly extending annular flange (2) formed integrally with said body portion (1), said annular flange, said closure element and said body portion all being imperforate, and said cap being filled, in use, with a sealing compound or mastic (4) and positioned over the exposed head (7) of said bolt so as to surround the head of said bolt completely.

10. A connection system as claimed in claim 9, wherein the width, W, of said annular flange is in the range 0.15D to 0.65D, where D is the diameter of said body portion.

## FIG.1

## FIG.2

# FIG. 3

# FIG . 4

(a)

(b)

(c)

(d)

(e)

(f)

(h)

(g)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-U-8 603 363 (VEREINIGTE SCHRAUBENWERKE GmbH) * Page 8, paragraph 2; figures 1,2 * | 1,2,9 | E 04 D 3/36 |
| Y | | 2,7 | |
| A | | 8 | |
| Y | GB-A- 420 109 (HURDEN) * Page 2, lines 46-62; figures 1-3 * | 2 | |
| A | US-A-3 300 929 (FISCHER) * Column 3, lines 5-15; figure * | 2 | |
| Y | BATIR, no. 182, March 1970, page 14: "Fixation de panneaux pour bardage et toiture" * Column 2, paragraph 2; figures * | 7 | |

TECHNICAL FIELDS SEARCHED (Int. Cl.4)

E 04 D

The present search report has been drawn up for all claims

| Place of search | Date of completion of the search | Examiner |
|---|---|---|
| THE HAGUE | 26-05-1988 | CHESNEAUX J.C. |

EPO FORM 1503 03.82 (P0401)